Europäisches Patentamt

European Patent Office

Office européen des brevets

(19)

(11) **EP 1 214 716 B1**

(12) **FASCICULE DE BREVET EUROPEEN**

(45) Date de publication et mention
de la délivrance du brevet:
**21.04.2004 Bulletin 2004/17**

(51) Int Cl.⁷: **G21C 17/06**

(21) Numéro de dépôt: **00956646.4**

(86) Numéro de dépôt international:
**PCT/FR2000/002284**

(22) Date de dépôt: **09.08.2000**

(87) Numéro de publication internationale:
**WO 2001/022428 (29.03.2001 Gazette 2001/13)**

(54) **PROCEDE DE CONTROLE DU SOUDAGE D'UN BOUCHON DE FERMETURE ETANCHE D'UN CRAYON DE COMBUSTIBLE POUR UN REACTEUR NUCLEAIRE**

VERFAHREN ZUR PRÜFUNG DER SCHWEISSVERBINDUNG EINES
KERNREAKTORBRENNSTABVERSCHLUSSSTÜCKS

METHOD FOR WELDING A SEALED CLOSURE PLUG TO A FUEL ROD IN A NUCLEAR REACTOR

(84) Etats contractants désignés:
**AT BE CH CY DE DK ES FI FR GB GR IE IT LI LU
MC NL PT SE**

(30) Priorité: **22.09.1999 FR 9911842**

(43) Date de publication de la demande:
**19.06.2002 Bulletin 2002/25**

(73) Titulaire: **SOCIETE FRANCO BELGE DE
FABRICATION DE COMBUSTIBLES-FBFC
92400 Courbevoie (FR)**

(72) Inventeur: **MAHE, Philippe
F-26750 Montmiral (FR)**

(74) Mandataire: **Jacobson, Claude
Cabinet Lavoix
2, Place d'Estienne d'Orves
75441 Paris Cedex 09 (FR)**

(56) Documents cités:
**EP-A- 0 117 686          US-A- 4 857 260
US-A- 5 602 885**

**Description**

L'invention concerne un procédé de contrôle du soudage d'un bouchon de fermeture étanche d'un crayon de combustible pour un réacteur nucléaire.

Les réacteurs nucléaires tels que les réacteurs nucléaires refroidis par de l'eau sous pression comportent un coeur constitué par des assemblages de combustible dans lequel de l'énergie sous forme de chaleur est produite pendant le fonctionnement du réacteur.

Chacun des assemblages de combustible est généralement constitué par un faisceau de crayons de combustible parallèles entre eux maintenus dans l'ossature de l'assemblage de combustible. Chacun des crayons de combustible comporte une gaine tubulaire en un matériau absorbant faiblement les neutrons, tel qu'un alliage de zirconium, dans laquelle sont empilées des pastilles de combustible nucléaire, par exemple des pastilles d'oxyde d'uranium $UO_2$ fritté. La gaine tubulaire est fermée à ses extrémités par des bouchons qui comportent chacun une partie cylindrique qui est engagée de manière coaxiale dans une partie d'extrémité de la gaine. Le bouchon et la gaine sont ensuite fixés l'un sur l'autre par soudage suivant une ligne circulaire située dans un plan sensiblement perpendiculaire à l'axe de la gaine et du bouchon.

La fabrication des crayons de combustible demande de nombreuses opérations successives pour réaliser le remplissage de la gaine par les pastilles de combustible, la mise en place et le soudage des bouchons et l'introduction, dans la gaine fermée de manière étanche par les bouchons, d'un gaz inerte sous pression tel que de l'hélium. De nombreux contrôles doivent être effectués pendant toutes les étapes de la fabrication du crayon de combustible, de manière à obtenir des crayons de combustible totalement exempts de défauts.

En particulier, la réalisation de la soudure des bouchons sur les extrémités de la gaine doit faire l'objet d'un contrôle rigoureux.

Le soudage des bouchons est réalisé dans un poste de soudage comportant une chambre étanche renfermant une atmosphère de gaz inerte dans laquelle on introduit une partie d'extrémité de la gaine sur laquelle est engagé un bouchon. La gaine et le bouchon sont reliés à un dispositif permettant de les mettre en rotation autour de leur axe commun, à l'intérieur de la chambre de soudage étanche. Le soudage est réalisé par fusion de parties de la gaine et du bouchon rapportés l'un contre l'autre, suivant le plan de joint perpendiculaire à l'axe du crayon. Pour réaliser la fusion dans la zone de soudure, on utilise un dispositif de soudage tel qu'une torche de soudage TIG ou une tête de soudage par faisceau laser. L'électrode de la torche de soudage TIG ou le faisceau de la tête de soudage par laser sont disposés suivant le plan de joint et sont dirigés sensiblement suivant une perpendiculaire à l'axe du crayon de combustible. Du fait de la précision d'usinage des surfaces d'extrémité de la gaine et du bouchon, qui comporte un épaulement séparant la partie cylindrique introduite dans la gaine d'une partie à plus grand diamètre restant à l'extérieur de la gaine, le contact entre la partie d'extrémité de la gaine et l'épaulement du bouchon ne peut être parfait et le plan de joint est constitué en réalité par le bord d'extrémité de la gaine et par l'épaulement du bouchon qui sont séparés par un faible interstice annulaire. Lors de la réalisation de la soudure par fusion de la gaine et du bouchon dans le plan de joint, l'interstice doit être fermé et entièrement comblé par du métal en fusion, pour qu'on assure une étanchéité parfaite de la jonction entre le bouchon et la gaine du crayon.

Pour réaliser une soudure dans de très bonnes conditions, il est nécessaire que le plan de joint tel qu'il vient d'être défini soit parfaitement positionné par rapport à l'axe de soudage constitué par l'axe de l'électrode dans le cas du soudage TIG ou par l'axe du faisceau dans le cas du soudage laser.

Après la réalisation de la soudure, il est nécessaire de vérifier que la fusion a bien été réalisée suivant toute la ligne circulaire de jonction, à l'intérieur du plan de joint et qu'il n'existe pas de discontinuité de la soudure qui se traduirait par un défaut d'étanchéité.

En outre, le contrôle du soudage des bouchons sur les gaines des crayons de combustible doit être effectué, de manière telle qu'on allonge le moins possible le temps de réalisation des crayons, pour éviter de réduire la productivité de la ligne de fabrication. Il est également souhaitable de disposer de moyens permettant d'effectuer un diagnostic rapide pour savoir si le crayon de combustible est acceptable.

On a proposé, par exemple dans le brevet US-A-5,602,885, de réaliser un contrôle optique des soudures des crayons de combustible, à partir d'images numérisées obtenues par une caméra à balayage couplée à un dispositif de numérisation de l'image.

A partir de chacune des images numérisées, on réalise une matrice de valeurs du pouvoir réflecteur de chacun des points élémentaires de l'image, ou pixels, disposés suivant des colonnes et des rangées de l'image. On calcule une valeur moyenne des valeurs de réflectivité des pixels de l'image et on compare la réflectivité de chacun des pixels à cette valeur moyenne. Lorsqu'un certain nombre de pixels voisins, correspondant à une zone de la soudure ayant la taille minimale d'un défaut pris en compte, s'écartent de la valeur moyenne d'une quantité excessive, on diagnostique la présence d'un défaut inacceptable de la soudure.

Un tel procédé est mis en oeuvre dans un poste de contrôle distinct du poste de soudage, de sorte qu'il est nécessaire de faire passer, après soudage, les crayons du poste de soudage au poste de contrôle. On ajoute donc au temps de fabrication des crayons la durée de la manutention entre le poste de soudage et le poste de contrôle et le temps nécessaire au contrôle.

Il est nécessaire également de prévoir des moyens de contrôle rotatifs pour réaliser le contrôle de la soudure par prise d'images suivant la ligne circulaire de soudure.

De plus, le procédé ne permet pas de contrôler le positionnement du bouchon et de la gaine, préalablement au soudage, et de réaliser des contrôles efficaces de conformité de la soudure, quel que soit le type de soudage réalisé.

Le but de l'invention est donc de proposer un procédé de contrôle du soudage d'un bouchon de fermeture étanche d'un crayon de combustible pour un réacteur nucléaire comportant une gaine tubulaire renfermant une pluralité de pastilles de combustible nucléaire empilées dans la direction axiale de la gaine et deux bouchons de fermeture étanche engagés coaxialement, par une partie cylindrique, chacun dans une partie d'extrémité axiale de la gaine, le soudage d'un bouchon étant réalisé dans un poste de soudage, par fusion de la gaine et du bouchon suivant une ligne de jonction circulaire, dans un plan de joint perpendiculaire à l'axe de la gaine et du bouchon, par un moyen de soudage dirigé radialement par rapport à la ligne de jonction circulaire dans le plan de joint de la gaine et du bouchon qui sont en prise avec un moyen permettant de les mettre en rotation autour de leur axe commun, le contrôle étant réalisé par exploitation d'images optiques numérisées de zones du crayon voisines de la ligne circulaire de jonction et réparties suivant la périphérie du crayon, ce procédé permettant de contrôler la mise en place correcte du bouchon sur la gaine du crayon, préalablement au soudage, et la conformité de la soudure, au poste de soudage, et en temps masqué, pendant l'opération de soudage du crayon.

Dans ce but :

- préalablement au soudage, le bouchon et la gaine étant en position de soudage au poste de soudage, on fait tourner la gaine et le bouchon autour de leur axe commun à l'aide du moyen de mise en rotation, on réalise des prises de vues d'une pluralité de zones réparties suivant la périphérie du crayon, pour obtenir des images sous forme numérisée et on détermine par analyse des images numérisées, le positionnement du plan de joint et on vérifie la réalisation de la rotation du crayon,
- on en déduit s'il est possible (ou non) de réaliser le soudage,
- dans le cas où l'on réalise le soudage, après le soudage du bouchon sur la gaine, on réalise des prises de vues sur le crayon en position au poste de soudage, suivant la périphérie du crayon, au voisinage de la ligne de jonction, de manière à obtenir des images numérisées et on réalise, par analyse des images numérisées, le contrôle de la conformité d'un cordon de soudure réalisé suivant la ligne de jonction.

Afin de bien faire comprendre l'invention, on va maintenant décrire, à titre d'exemple, en se référant aux figures jointes en annexe, la mise en oeuvre du procédé de contrôle suivant l'invention, dans le cas d'un soudage TIG et dans le cas d'un soudage au laser, d'un bouchon sur la gaine d'un crayon de combustible d'un réacteur nucléaire à eau sous pression.

La figure 1 est une vue en coupe axiale partielle de l'extrémité d'un crayon de combustible, avant soudage du bouchon de fermeture.

La figure 2 est une vue en coupe axiale partielle de l'extrémité du crayon, après soudage du bouchon.

La figure 3 est une vue schématique d'un poste de soudage TIG de bouchons de crayons de combustible et des moyens de contrôle utilisés pour la mise en oeuvre d'un procédé selon l'invention.

La figure 4 est une vue schématique d'un poste de soudage par laser de bouchons de crayons de combustible et d'un dispositif de contrôle du soudage pour la mise en oeuvre du procédé de l'invention.

Les figures 5, 6, 7 et 8 sont des images apparaissant sur l'écran du dispositif de contrôle pendant la mise en oeuvre du procédé suivant l'invention, dans le cas d'un soudage TIG.

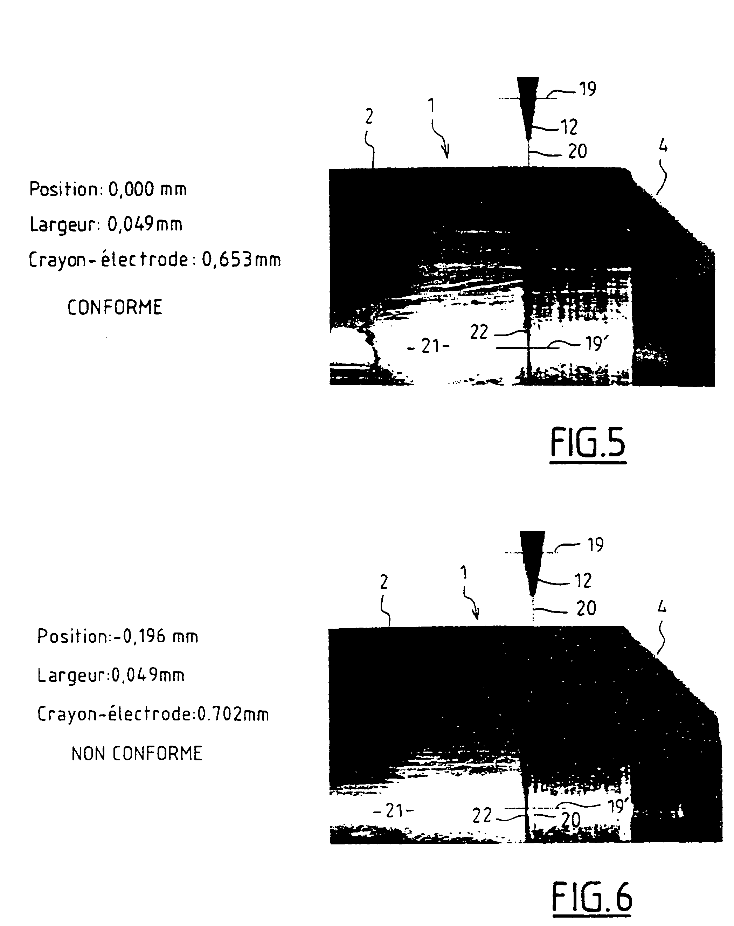

Les figures 5 et 6 sont relatives au contrôle de la position du plan de joint, avant soudage.

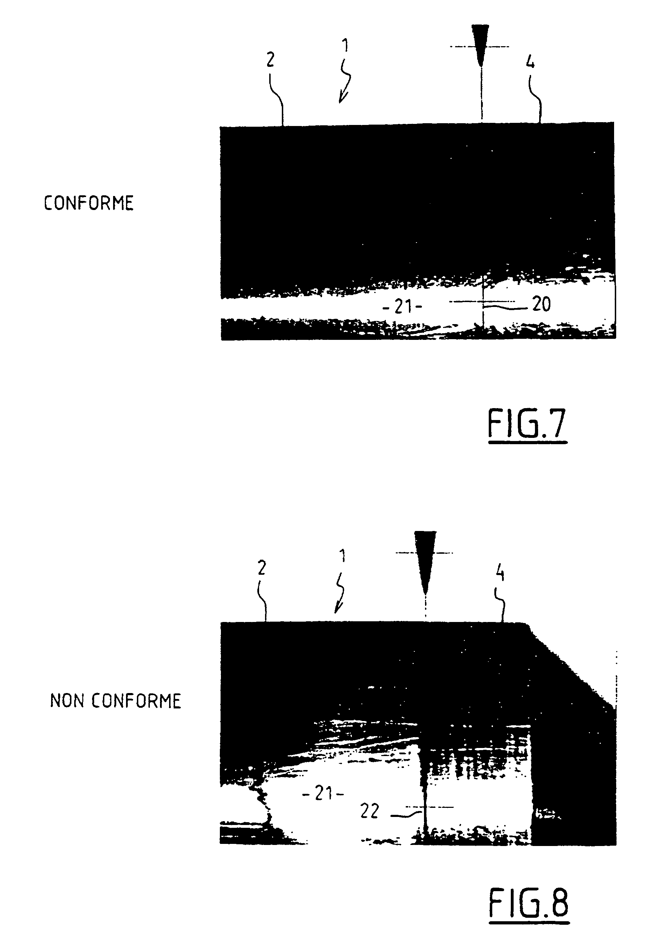

Les figures 7 et 8 sont relatives au contrôle du cordon de soudure.

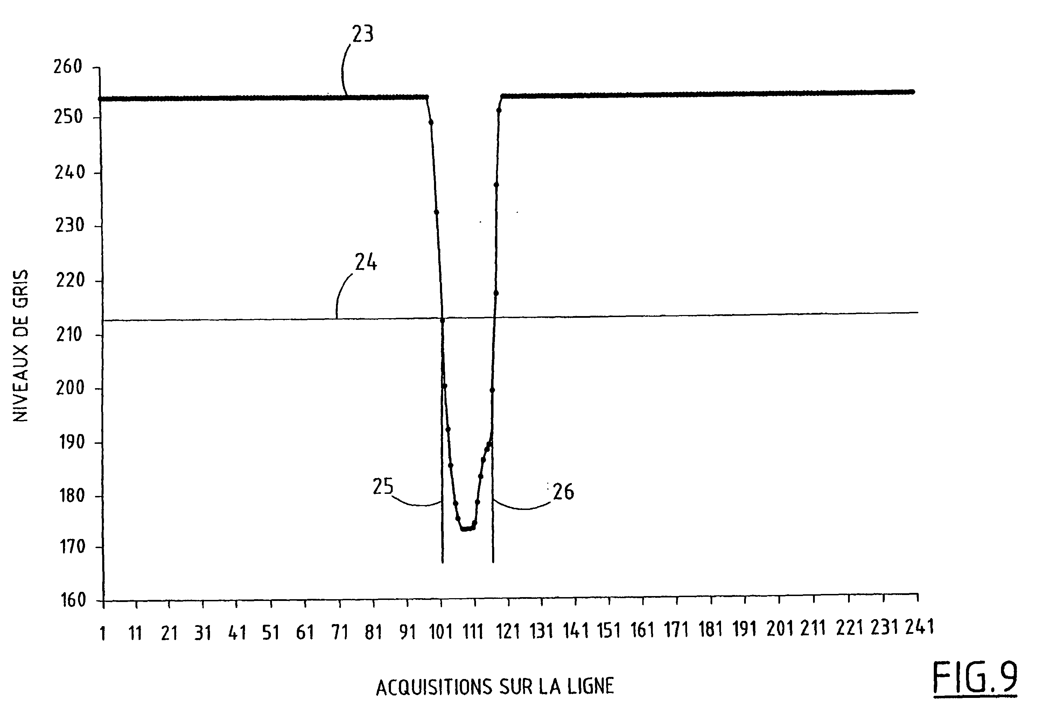

La figure 9 est un diagramme donnant le niveau de gris suivant une ligne de l'image traversant le plan de joint.

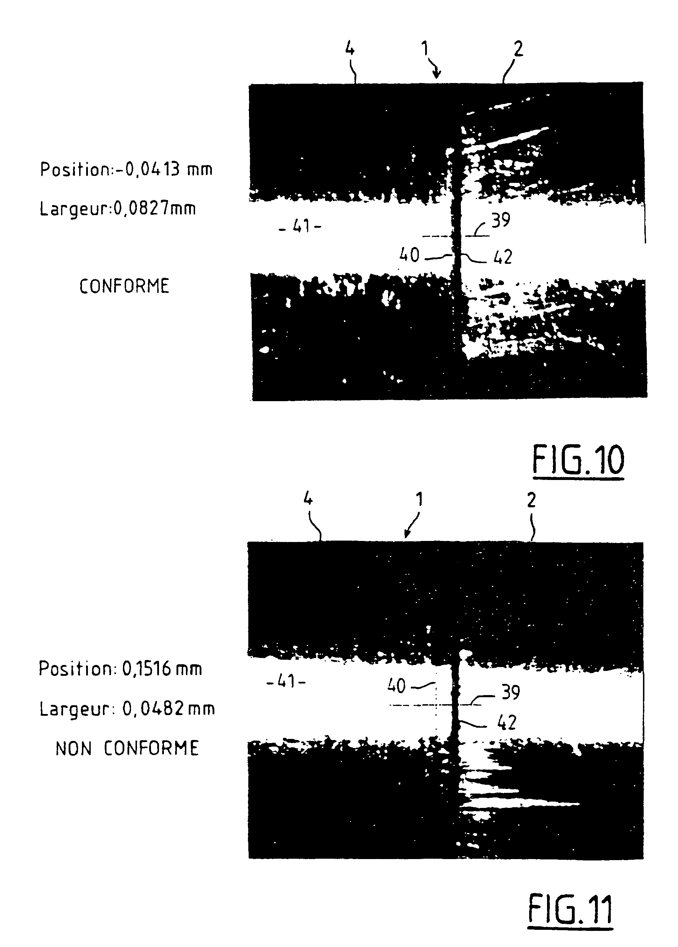

Les figures 10,11 et 12 correspondent à des images apparaissant sur l'écran du dispositif de contrôle dans le cas de la mise en oeuvre du procédé suivant l'invention pour le contrôle d'un soudage par laser.

Les figures 10 et 11 sont relatives à la recherche du plan de joint.

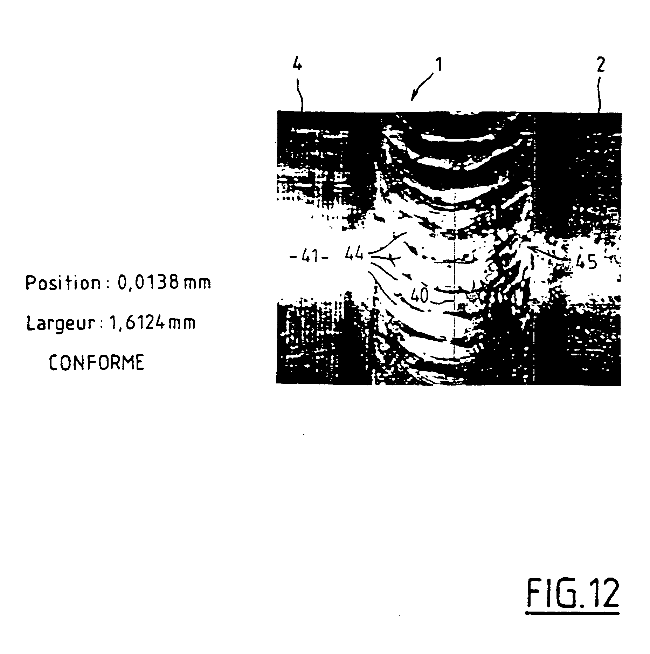

La figure 12 montre un cordon de soudure réalisé par laser pulsé.

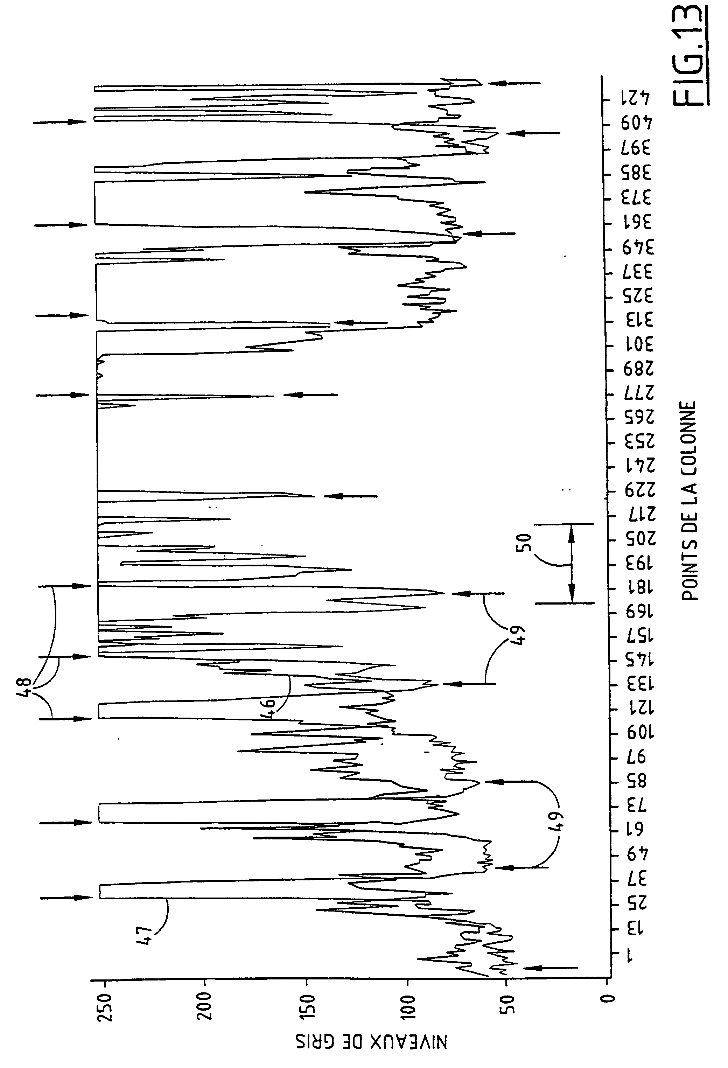

Les figures 13, 14 et 15 sont des diagrammes utilisés dans le cadre du procédé de contrôle d'un cordon de soudure réalisé par soudage laser pulsé.

La figure 13 est un diagramme donnant le niveau de gris de points d'une colonne de l'image obtenue lors du contrôle, dans la zone de soudure et hors de la zone de soudure.

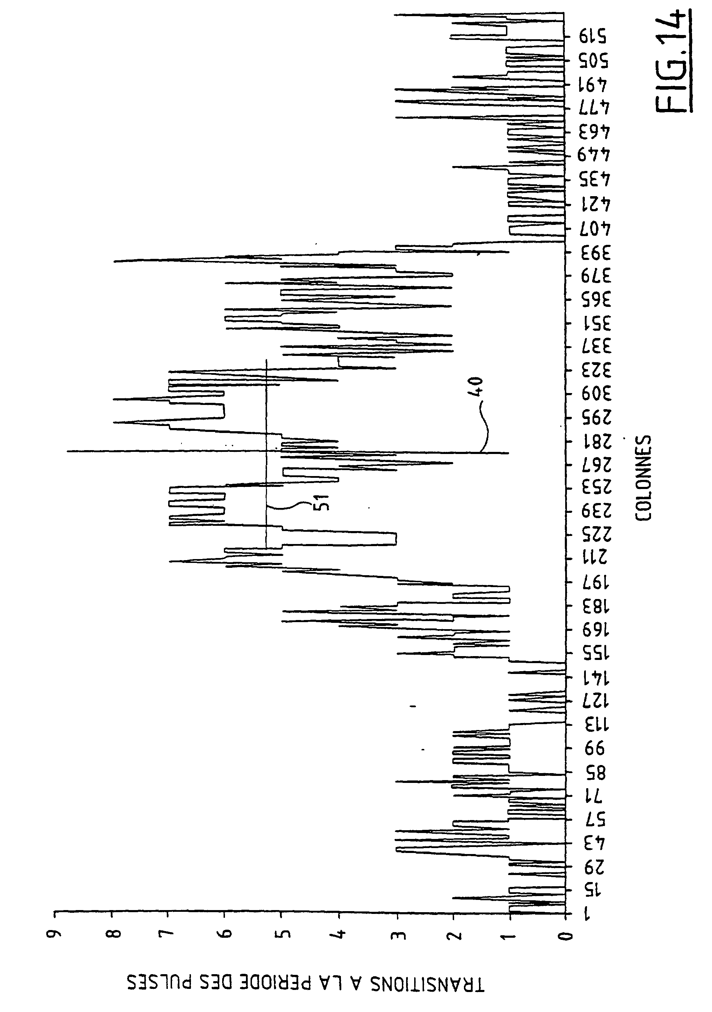

La figure 14 est un diagramme donnant les transitions, qui respectent la période des pulses de soudage, entre minima et maxima des niveaux de gris suivant les colonnes de l'image.

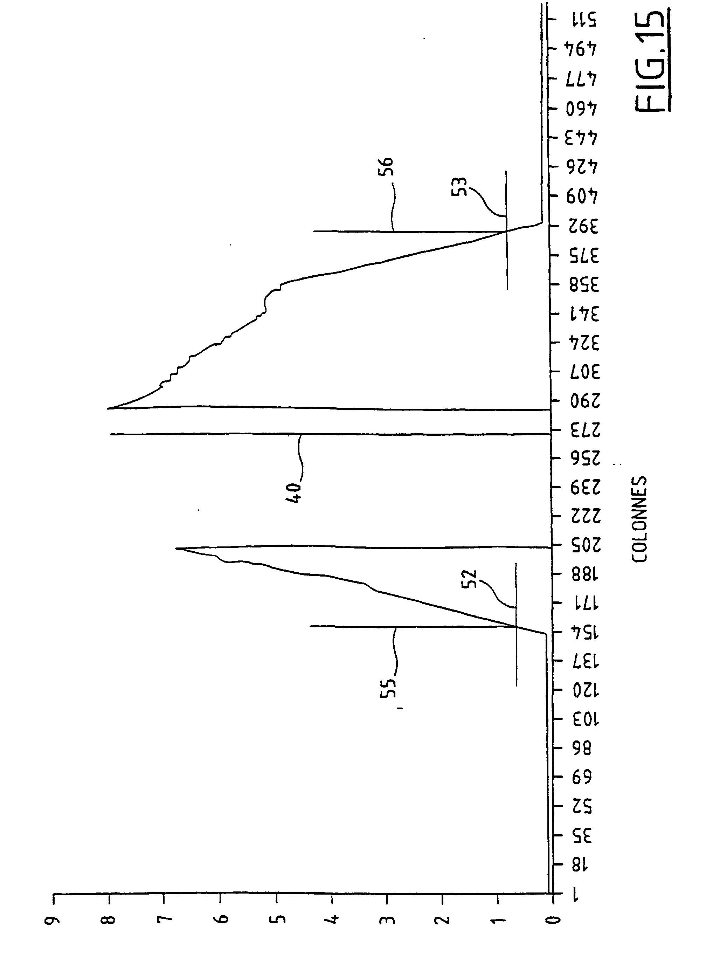

La figure 15 est un diagramme déduit du diagramme de la colonne 14 par filtrage, utilisé pour la recherche des bords du cordon de soudure.

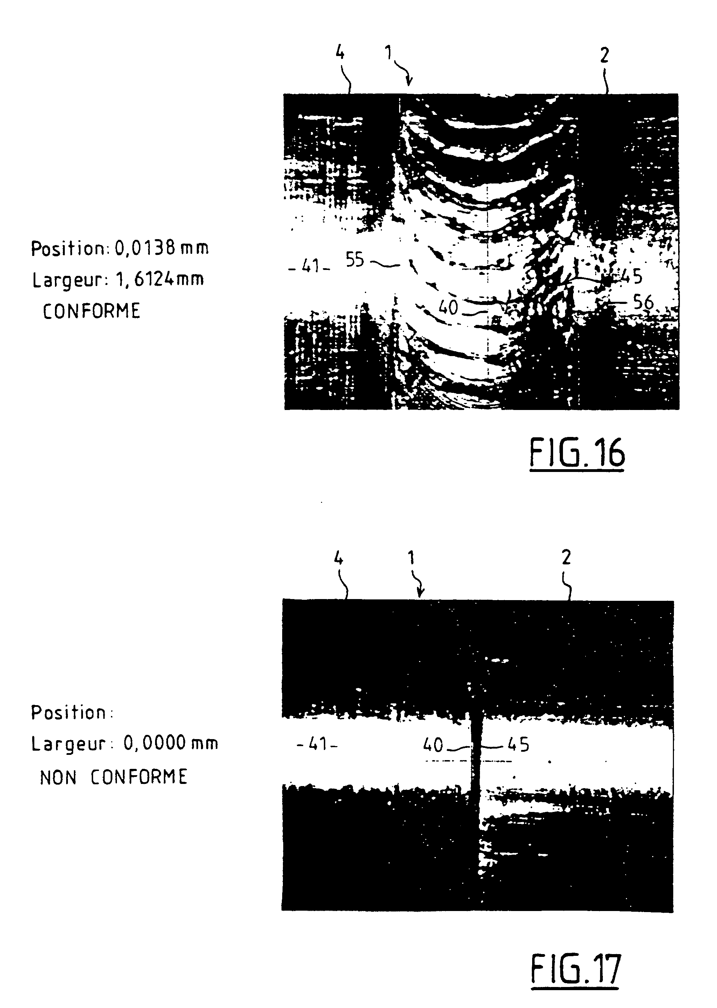

Les figures 16 et 17 sont des images apparaissant sur l'écran du dispositif de contrôle, comme résultat du contrôle de cordons de soudure réalisés par soudage au laser.

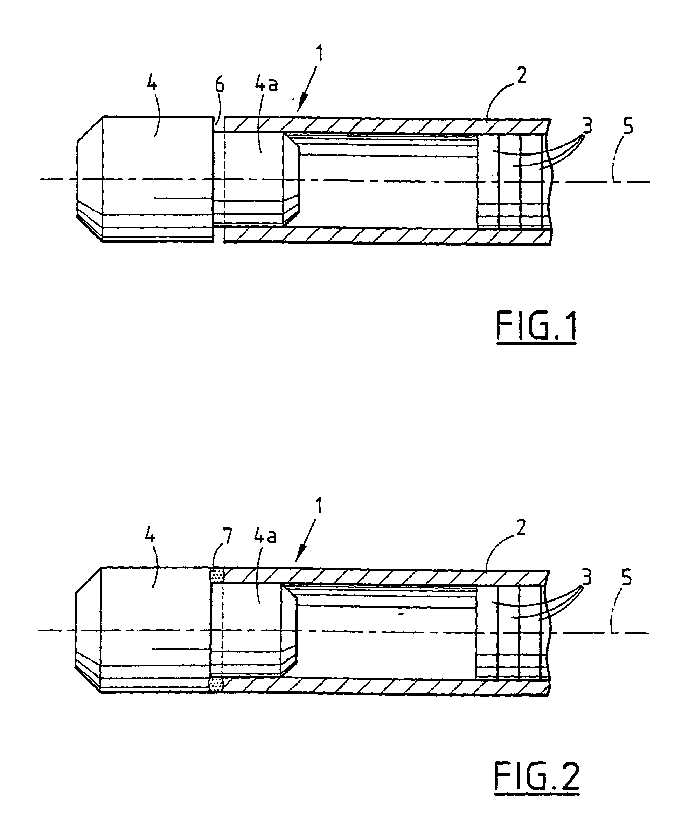

Sur la figure 1 et sur la figure 2, on voit la partie d'extrémité d'un crayon de combustible pour un réacteur nucléaire à eau sous pression désigné de manière générale par le repère 1.

Le crayon 1 comporte en particulier une gaine tubulaire 2 en alliage de zirconium qui renferme des pastilles de combustible 3 et qui est fermée à ses extrémités par des bouchons tels que le bouchon 4 de fermeture de l'extrémité de la gaine 2 représentée sur les figures 1 et 2.

Le bouchon 4 est généralement en alliage de zirconium et comporte une partie 4a qui est engagée pratiquement sans jeu dans la partie d'extrémité de l'alésage de la gaine 2.

Comme représenté sur la figure 1, le bouchon 4 est engagé à l'intérieur de la gaine 2 dans une disposition coaxiale, l'axe du bouchon et l'axe de la gaine 2 étant confondus suivant l'axe longitudinal 5 du crayon de combustible.

Le bouchon 4 comporte un épaulement perpendiculaire à l'axe 5, entre sa partie cylindrique 4a à plus faible diamètre engagée à l'intérieur de la gaine 2 et une partie du bouchon 4 restant à l'extérieur de la gaine. Entre l'épaulement du bouchon et l'extrémité de la gaine, subsiste, après engagement du bouchon en position de fermeture, un très faible interstice 6 de forme annulaire.

Après soudage de la gaine, comme représenté sur la figure 2, le cordon de soudure 7 assure à la fois le remplissage et la fermeture de l'interstice 6, la jonction de la gaine 2 et du bouchon 4 et l'étanchéité de la jonction entre la gaine et le bouchon.

La soudure est réalisée en mettant en rotation, à l'intérieur d'un poste de soudage, la gaine 2 dans laquelle est engagé le bouchon 4, autour de l'axe 5 commun à la gaine et au bouchon et en réalisant la fusion de l'extrémité de la gaine 2 et d'une partie du bouchon 4, en utilisant un dispositif de soudage qui est dirigé radialement par rapport à la ligne circulaire de jonction entre la gaine et le bouchon située dans un plan de joint perpendiculaire à l'axe 5 commun à la gaine 2 et au bouchon 4.

En fait, on désigne par plan de joint la zone comprise entre deux plans perpendiculaires à l'axe 5, l'un de ces plans contenant l'extrémité de la gaine 2 et l'autre plan l'épaulement du bouchon 4. De même, la ligne circulaire de jonction est en fait une zone annulaire s'étendant suivant l'interstice 6 et dans laquelle se forme le cordon de soudure 7, au cours du soudage.

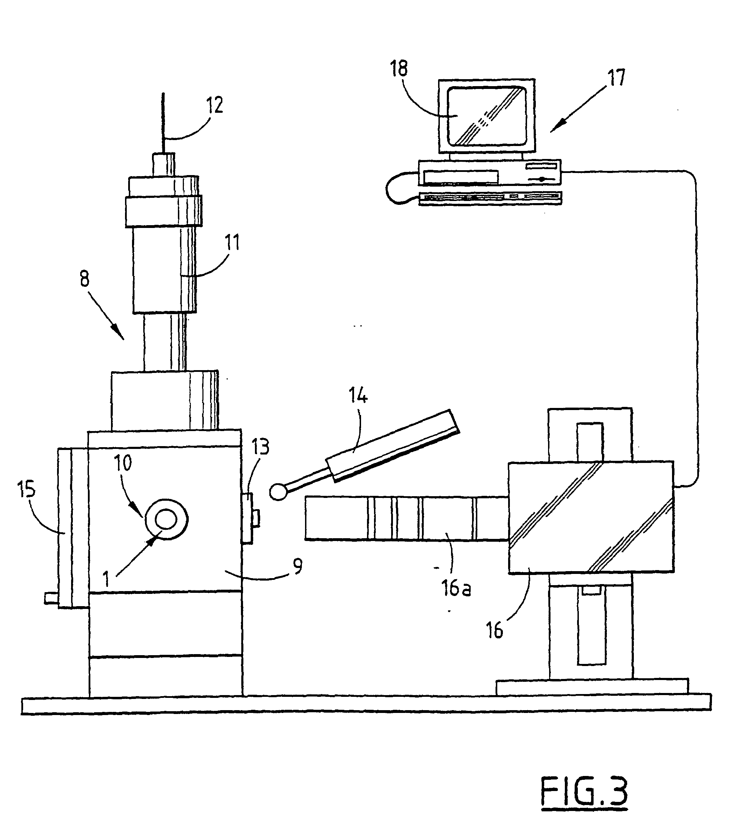

Sur la figure 3, on a représenté un poste de soudage suivant un premier mode de réalisation permettant d'effectuer le soudage de bouchons sur des parties d'extrémité de crayons de combustible par une méthode TIG, c'est-à-dire une méthode de soudage par arc électrique dans une atmosphère de gaz inerte, en utilisant une électrode en tungstène.

Sur la figure 3, on a également représenté un dispositif de contrôle permettant de mettre en oeuvre le procédé de l'invention.

Le poste de soudage, désigné de manière générale par le repère 8, comporte une chambre de soudage 9 fermée de manière étanche renfermant un gaz inerte tel que de l'argon, à l'intérieur de laquelle on réalise le soudage de bouchons sur des parties d'extrémité de gaines de crayons de combustible.

La chambre 9 comporte sur l'une de ses faces latérales un dispositif de passage étanche 10 à travers la paroi de la chambre, d'une partie d'extrémité d'un crayon de combustible 1 analogue à la partie d'extrémité du crayon représentée sur la figure 1.

Sur la face supérieure de la chambre 9 est montée, dans une disposition verticale, une torche de soudage TIG 11 comportant une électrode de soudage en tungstène 12 de direction verticale qui traverse la torche 11, de manière à pénétrer à l'intérieur de la chambre, la partie d'extrémité de l'électrode présentant un axe constituant l'axe de soudage qui est disposé dans le plan de joint du bouchon et de la gaine du crayon 1 et dans une direction perpendiculaire à l'axe du crayon, c'est-à-dire une direction radiale par rapport à la ligne circulaire de jonction entre le bouchon et la gaine du crayon 1.

Pour réaliser le soudage, on alimente l'électrode en courant électrique avec une différence de potentiel entre la gaine et le bouchon du crayon et l'électrode telle qu'un arc électrique éclate entre la pointe de l'électrode située à l'intérieur de l'enceinte étanche à une distance faible de la zone de jonction du bouchon et de la gaine et cette zone de jonction.

Une première face latérale de la chambre de soudage 9 perpendiculaire à la face portant la traversée étanche 10 du crayon 1 comporte un hublot transparent 13 à travers lequel de la lumière est envoyée en direction de la zone de jonction du crayon, par un dispositif d'éclairage 14. Cette première face latérale de la chambre 9 est appelée face avant et le dispositif d'éclairage 14 est appelé dispositif d'éclairage avant. Une seconde face, ou face arrière de la chambre 9, porte un hublot et un dispositif 15 d'éclairage arrière (backlight) de la zone de jonction du crayon 1.

Une caméra numérique 16 comportant un ensemble optique 16a et un module de numérisation est reliée à un micro-ordinateur 17, par l'intermédiaire d'une carte d'acquisition d'images. Le micro-ordinateur 17 comporte également une carte d'entrée-sortie numérique permettant d'assurer la communication entre le micro-ordinateur et un automate qui gère l'équipement de soudage TIG. En particulier, après le contrôle de la position du plan de joint par rapport à l'axe de soudage, le micro-ordinateur communique à l'automate de soudage un ordre signifiant l'autorisation ou l'interdiction d'effectuer le soudage, suivant le résultat du contrôle du positionnement du plan de joint. De même, un verdict est transmis à l'automate, après le contrôle de la soudure.

Les images de la zone de jonction du crayon 1 parviennent à la partie optique 16a de la caméra numérique 16, à travers le hublot avant 13 et sont numérisées avant d'être transmises au micro-ordinateur 17, par l'intermédiaire de la carte d'acquisition d'images.

Le micro-ordinateur 17 comporte un écran 18 sur lequel on peut visualiser la zone de jonction du crayon et les résultats du contrôle.

Comme indiqué plus haut, une première étape du contrôle du soudage suivant l'invention consiste à contrôler le positionnement du plan de joint entre le bouchon et la gaine du crayon, préalablement au soudage.

Dans le cas du soudage TIG, on détermine la position du plan de joint par rapport à l'axe de l'électrode en tungstène, la largeur du plan de joint dans la direction axiale du crayon, et la distance entre la pointe de l'électrode et la zone de jonction du crayon et on émet un diagnostic relatif au positionnement de la zone de jonction par rapport à l'électrode.

Le contrôle du plan de joint est effectué pendant une phase de balayage en gaz inerte de la zone de jonction du crayon à l'intérieur de la chambre de soudage, le crayon étant mis en rotation autour de son axe à l'intérieur de la chambre de soudage par un dispositif de mise en rotation du poste de soudage.

On peut ainsi réaliser des opérations de recherche et de détermination de position du plan de joint en une pluralité de zones réparties à la périphérie de la zone de jonction du crayon.

Par exemple, on peut réaliser huit opérations successives de recherche et de détermination de la position du plan de joint dans huit zones réparties à la périphérie du crayon, pour déterminer la conformité de la position du plan de joint par rapport à l'électrode. Dans ce cas, il est possible de choisir un nombre de recherches conformes, c'est-à-dire sans défaut de position ou de largeur du plan de joint sur le nombre total de recherches et de déterminations effectuées, pour émettre un verdict concernant la conformité du positionnement. Par exemple, dans le cas de huit opérations de recherche et de détermination du positionnement du plan de joint, on choisira un nombre de recherches conformes qui peut être égal à cinq.

On vérifie également que la rotation du crayon s'est effectuée correctement entre les opérations de recherche et de détermination de position du plan de joint.

On considérera que la rotation du crayon n'est pas conforme lorsque toutes les positions du crayon, déterminées par les opérations successives de recherche et de détermination du plan de joint, sont identiques.

Du fait que le plan de joint est en réalité une zone délimitée entre deux plans perpendiculaires à l'axe du crayon, on détermine la position du plan de joint, par la distance dans la direction axiale qui sépare l'un au moins des plans, de l'axe de l'électrode constituant l'axe de soudage.

Par exemple, dans le cas de la recherche qui sera décrite plus loin, on détermine la distance entre le bord gauche du plan de joint sur l'image et l'axe de l'électrode en tungstène, dans la direction axiale.

La largeur du plan de joint correspond à la distance axiale entre la partie d'extrémité de la gaine et l'épaulement du bouchon, c'est-à-dire la largeur de l'interstice 6 qui peut être variable suivant la ligne de jonction circulaire.

Dans un premier temps, on réalise sur les images numérisées des mesures relatives à l'électrode 12, comme il est visible sur les figures 5 et 6.

On réalise tout d'abord la recherche de l'électrode en suivant une ligne de recherche d'électrode 19 qui est perpendiculaire au plan de joint, c'est-à-dire horizontale sur l'image affichée sur l'écran, telle que représentée sur les figures 5 et 6. On recherche pour cela, suivant la ligne de recherche 19, les fronts de niveaux de gris produits par les bords de l'électrode 12. Dans le cas où la recherche ne permet pas de trouver l'électrode, on envoie un signal de défaut.

La ligne de recherche 19 de l'électrode est centrée automatiquement sur une ligne de référence 20. Le positionnement de la ligne de recherche et de la ligne de référence 20 est réalisé visuellement, lorsque le poste de soudage TIG a été correctement réglé.

A l'issue de la recherche de l'électrode, on peut déterminer l'axe du soudage qui, dans le cas du soudage TIG, correspond à l'axe de l'électrode trouvé précédemment. On effectue ensuite la recherche du plan de joint 22 (figures 5 et 6) qui correspond à l'interstice 6 entre le crayon et le bouchon.

Pour cela, le crayon et le bouchon 4 sont éclairés à l'intérieur de la chambre de soudage suivant une zone d'éclairement maximal 21 visible sur les figures 5 et 6. La recherche du plan de joint suivant des lignes de recherche telles que la ligne 19' représentée sur les figures 5 et 6 est réalisée dans la zone éclairée 21.

La ligne de référence 20, qui est verticale sur l'image, est positionnée sur le bord gauche d'un plan de joint théorique, les lignes de recherche étant centrées sur celle-ci ; la position du plan de joint réel est déterminée par la distance horizontale entre le bord gauche du joint et l'axe de l'électrode trouvé précédemment. La largeur du plan de joint est déterminée par la distance horizontale entre le bord gauche et le bord droit du joint.

On effectue, à partir de lignes de recherche 19' centrées sur la ligne de référence 20, la recherche du bord droit et du bord gauche du plan de joint par la méthode de traitement qui sera décrite ci-dessous en se référant à la figure 9.

On effectue également une mesure de la distance entre la pointe de l'électrode 12 et le crayon, suivant l'axe de l'électrode trouvé précédemment, c'est-à-dire suivant une direction verticale sur l'image, en mesurant la distance entre les fronts de changement de niveau de gris détectés sur cet axe. La sortie de l'électrode au niveau de sa pointe se traduit par un front noir blanc sur l'image et l'entrée dans le crayon par un front blanc noir. Entre cette sortie et cette entrée, on mesure la distance en points de l'image suivant une colonne verticale.

La figure 9 illustrant la recherche du plan de joint est un diagramme donnant les niveaux de gris de points de l'image situés sur une ligne de recherche moyenne qui est constituée lors d'un traitement préalable de l'image.

On utilise un paramètre N qui est entré dans le dispositif de traitement, ce paramètre N correspondant au nombre de lignes supérieures et au nombre de lignes inférieures encadrant la ligne de recherche telle que 19', qui sont utilisées pour constituer une moyenne des niveaux de gris sur les 2 x N lignes correspondantes. Le paramètre N est désigné comme nombre de lignes pour moyenne. On trace la courbe 23 de la figure 9 qui est représentative des niveaux de gris suivant la ligne moyenne, les points de la ligne (245 points par exemple pour l'ensemble de la ligne) étant portés en abscisse.

On détermine les valeurs du minimum et du maximum sur la courbe 23 représentative du niveau de gris de la ligne moyenne.

On calcule une valeur de seuil qui est égale à la demi-somme de la valeur maximale et de la valeur minimale déterminées précédemment. On trace la droite 24 parallèle à l'axe des abscisses qui correspond à la valeur de seuil.

On effectue ensuite la recherche du bord gauche du plan de joint à partir des niveaux de gris des points de l'image numérisée, en partant de l'extrémité gauche de la ligne de recherche moyenne. On estime avoir trouvé le bord gauche dès que trois points consécutifs sont détectés sous le seuil figuré par la droite 24. On détermine ainsi le bord gauche 25 du plan de joint. On détermine la position, du bord gauche par rapport au bord de l'image et on calcule la distance entre le bord gauche et l'axe de l'électrode trouvé précédemment.

On détermine ensuite la position du bord droit du plan de joint en considérant les niveaux de gris des points de l'image situés successivement depuis l'extrémité de droite de la ligne moyenne de recherche et en comparant ces niveaux de gris à la valeur de seuil représentée par la droite 24.

Dès que trois points sont détectés sous le seuil, on considère avoir atteint le bord droit 26 du plan de joint.

On peut alors déterminer la largeur du joint entre le bord gauche 25 et le bord droit 26.

On compare les valeurs représentatives de la position du joint, c'est-à-dire la distance entre le bord gauche du joint et l'axe de l'électrode, et la largeur du joint, à des seuils qui sont définis par des paramètres tolérance de position à gauche de l'électrode, tolérance de position à droite de l'électrode et largeur maximale du plan de joint.

On affiche les résultats de la comparaison sur l'écran du micro-ordinateur 17.

Lorsqu'on a dépassé l'une au moins des valeurs de seuil, un diagnostic est émis et un ordre est transmis à l'automate, de manière que le soudage ne soit pas effectué.

Sur la figure 5, on a représenté l'image apparaissant sur l'écran relative à une recherche satisfaisante du plan de joint 22 qui se trouve placé exactement suivant la ligne de référence 20 confondue avec l'axe de l'électrode.

Au contraire, sur la figure 6, on a représenté l'image apparaissant sur l'écran, dans le cas d'un plan de joint non conforme, le plan de joint 22 étant décalé vers la gauche par rapport à la position de la ligne de référence 20.

De même des diagnostics défavorables peuvent être émis dans le cas où la distance entre la pointe de l'électrode et le crayon se trouve en dehors d'un intervalle déterminé ou encore, lorsque la largeur du plan de joint est supérieure à une valeur de seuil.

La recherche du plan de joint et la détermination de sa position et de sa largeur peuvent être effectuées dans une pluralité de zones à la périphérie du crayon qui est mis en rotation autour de son axe.

On peut également effectuer un contrôle continu du plan de joint en faisant tourner le crayon et en prenant des images successives, le traitement de chacune des images étant réalisé avant la prise de l'image suivante.

Après avoir effectué le soudage TIG, pendant la phase de refroidissement de la soudure, on effectue un contrôle de la soudure afin d'émettre un verdict final sur la qualité de la soudure qui sera transmis à l'automate du poste de soudage.

Le contrôle de la soudure est réalisé suivant un processus identique au processus de recherche du plan de joint. Ce processus a été décrit plus haut. On constate la présence d'un défaut, lorsque le plan de joint est détecté.

Lorsque deux défauts consécutifs de la soudure sont détectés, le contrôle est arrêté et le cordon de soudure est déclaré manquant dans une zone du crayon. Tant que deux défauts consécutifs ne sont pas détectés, le contrôle se poursuit. En fin de contrôle, le verdict final est envoyé à l'automate du poste de soudage.

Le contrôle de la soudure est réalisé suivant la séquence indiquée ci-après :

- acquisition continue des images du cordon de soudure, l'image suivante étant acquise pendant le traitement de l'image précédente,

- pour chaque image, recherche du cordon de soudure. Si N défauts (généralement deux défauts) d'intégrité consécutifs du cordon de. soudure sont détectés, le contrôle est arrêté et le cordon de soudure est déclaré défectueux. N est le paramètre seuil de rejet.
- affichage des résultats.

Sur la figure 7, on a représenté un cordon de soudure conforme dans une zone 21 fortement éclairée du crayon 1, le cordon de soudure étant totalement invisible sur l'image ; aucune partie du plan de joint n'apparaît sur cette image.

Au contraire, sur la figure 8, on a représenté dans une zone fortement éclairée 21 du crayon 1, un cordon de soudure défectueux, le plan de joint 22 ayant été détecté dans cette zone.

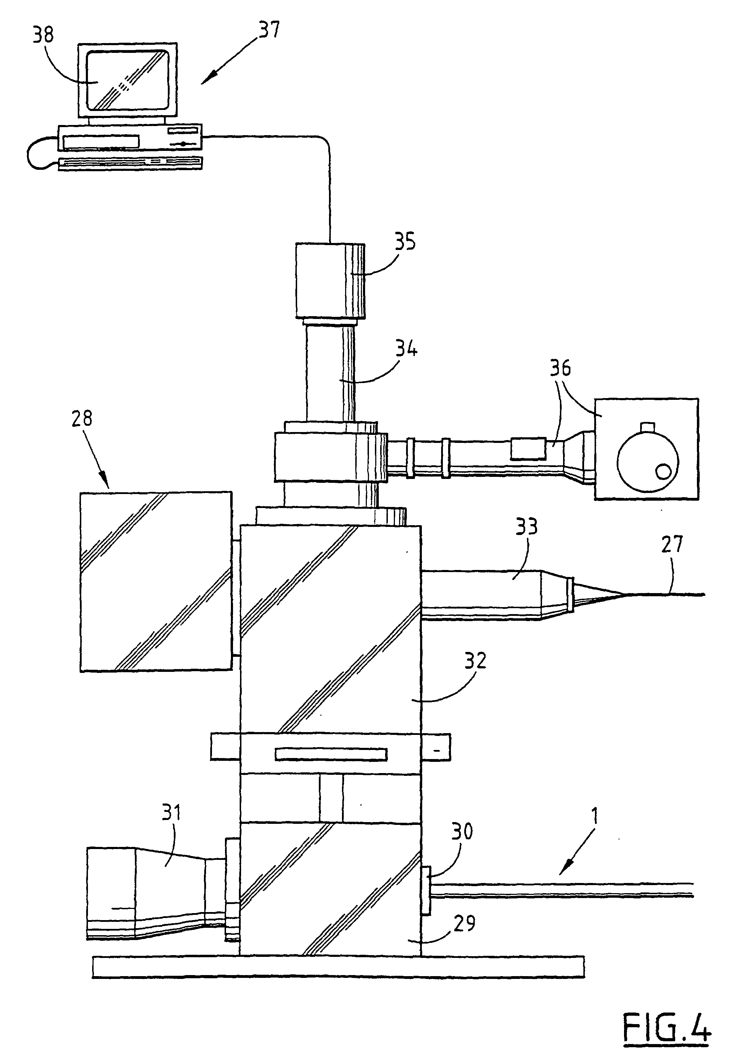

Sur la figure 4, on a représenté un poste de soudage de bouchons sur des crayons de combustible par faisceau laser et un dispositif de contrôle du soudage par le procédé suivant l'invention.

Le poste de soudage, qui est désigné dans son ensemble par le repère 28, comporte une chambre de soudage 29 dans laquelle l'extrémité du crayon de combustible 1 comportant le bouchon est introduite par l'intermédiaire d'un dispositif de passage étanche 30 traversant l'une des faces latérales de la chambre 29. Sur la face latérale opposée à la face comportant le dispositif de passage 30 du crayon 1 est fixé un dispositif de butée réglable 31 qui permet de positionner la zone de jonction du bouchon et de la gaine du crayon 1 par rapport au dispositif de soudage par faisceau laser.

Le poste de soudage 28 comporte en particulier un ensemble optique 32 qui comporte un miroir de renvoi et de focalisation du faisceau laser. L'ensemble optique 32 est alimenté à partir du générateur laser, par une fibre optique 27 reliée à un collimateur 33.

Sur la face supérieure d'un boîtier renfermant l'ensemble optique 32 sont fixés l'optique 34 d'une caméra numérique 35 et un système d'éclairage 36.

La caméra numérique 35 est reliée à un micro-ordinateur 37 comportant un écran d'affichage 38.

Comme dans le cas du soudage TIG, on réalise successivement le contrôle du plan de joint avant soudage et le contrôle du cordon de soudure réalisé, dans le cas où le plan de joint a été considéré comme conforme.

La recherche et la détermination de la position du plan de joint sont effectuées par une méthode analogue à la méthode utilisée dans le cas du soudage TIG.

Cette méthode ne sera donc pas décrite à nouveau.

Cependant, la ligne de référence par rapport à laquelle on détermine la position des bords du plan de joint est définie et déterminée d'une manière différente dans le cas du soudage par faisceau laser et dans le cas du soudage TIG.

Dans le cas du soudage TIG, la ligne de référence sert uniquement de support au lignes de recherches 19 et 19'. La position du plan de joint est déterminée par rapport à l'axe de l'électrode lui-même détecté par traitement d'image.

Dans le cas du soudage laser, on utilise une référence fixe sous la forme d'une ligne verticale sur l'écran qui constitue une mire par rapport à laquelle on détermine la position des bords du plan de joint.

Après avoir réglé le poste de soudage laser, on effectue un tir sur la surface du crayon et la ligne de référence est choisie comme ligne verticale de l'image passant par la trace du tir laser. La ligne de référence correspond donc à l'axe de soudage. On détermine la position du plan de joint par rapport à la ligne de référence et la largeur du plan de joint et on vérifie la réalisation de la rotation du crayon.

Sur la figure 10, on a représenté, dans une zone fortement éclairée 41 du crayon 1, la ligne de référence 40, une ligne de recherche 39 du plan de joint et le plan de joint 40 et 42. Le bord gauche du plan de joint est confondu avec la ligne de référence 40 et la largeur du plan de joint est conforme.

Sur la figure 11, on a représenté un plan de joint 42 non conforme qui est décalé vers la droite par rapport à la ligne de référence 40. Dans le cas où le pian de joint est conforme, on émet un diagnostic favorable et on transmet à l'automate un signal d'autorisation du soudage.

On effectue le soudage par faisceau laser pulsé, pendant la rotation du crayon.

Comme il est visible sur la figure 12, le cordon de soudure 45, réalisé par faisceau laser pulsé qui est centré sur la ligne de référence 40 comporte des vagues successives 44 de forme sensiblement circulaire correspondant chacune à un tir laser. La distance entre les vagues 44, suivant la direction verticale de l'image représentant la direction circonférentielle de déplacement en rotation du crayon correspond au déplacement entre deux pulses successifs du faisceau laser.

On réalise une acquisition continue des images numérisées, l'image suivante étant acquise pendant le traitement de l'image précédente.

On effectue une recherche des bords gauche et droit du cordon de soudure et on détermine leur position par rapport à la ligne de référence 40. On détermine également, à partir de la position des bords du cordon de soudure, la largeur du cordon.

A partir de la largeur du cordon de soudure, on peut déterminer la profondeur de pénétration du soudage dans la gaine et le bouchon du crayon, du fait qu'il existe une corrélation entre la largeur d'un cordon de soudage par faisceau laser et la profondeur de pénétration de la soudure.

La figure 13 est un diagramme donnant les niveaux de gris dans une échelle allant du noir au blanc, des points d'une image du cordon de soudure suivant une première colonne (c'est-à-dire une ligne verticale de l'image correspondant à une ligne circulaire périphérique du crayon dans un plan perpendiculaire à l'axe du crayon) située dans le cordon de soudure et d'une seconde colonne de l'image située en dehors du cordon de soudure.

La courbe 46 correspond à une colonne en dehors du cordon de soudure et la courbe 47 à une colonne de l'image située dans le cordon de soudure.

Les vagues successives du cordon de soudure se traduisent par des pics et des creux qui sont indiqués, respectivement, par les flèches 48 et 49.

On a également donné sous la forme d'une flèche 50 la distance de déplacement du crayon, pendant une durée correspondant à la période des pulses du faisceau laser.

On réalise des diagrammes analogues au diagramme de la figure 13 pour chacune des colonnes de l'image du cordon de soudure et pour chacun des diagrammes obtenus, analogues au diagramme de la figure 13, on recherche les couples de transition entre un creux et un pic qui présentent une périodicité compatible avec la périodicité des pulses de soudage.

On relève pour chacune des colonnes du cordon de soudage et des zones voisines des bords latéraux du cordon le nombre de transitions respectant la périodicité des pulses de soudage, ces nombres de transitions en fonction des colonnes de l'image sont reportés à la figure 14.

Sur la figure 14, on a représenté la ligne de référence 40 et les pics correspondants au nombre de transitions respectant la périodicité des pulses de soudage pour chacune des colonnes de l'image.

On détermine, dans la partie du diagramme située à gauche de la ligne de référence 40, le maximum du nombre de transitions qui est désigné comme maximum gauche.

De même, on détermine dans la partie du diagramme située à droite de la ligne de référence, le nombre maximal de transitions dans une co-lonne, ce maximum étant appelé maximum droit.

On détermine également la moyenne centrale des transitions entre les maxima qui est figurée par la droite 51 parallèle à l'axe des abscisses.

On considère qu'il y a bien un cordon de soudure réalisé sur le crayon, lorsque les maxima gauche et droit sont supérieurs à une certaine limite qu'on peut choisir par exemple égale à quatre et lorsque la moyenne centrale est supérieure à une certaine limite qui peut être par exemple de trois.

Une moyenne centrale supérieure à une certaine limite permet de déterminer la présence d'un cordon de soudure dans la zone centrale.

Dans le cas où les conditions relatives aux maxima et/ou à la moyenne centrale ne sont pas respectées, on effectue une recherche du plan de joint. Dans le cas où le plan de joint n'est pas trouvé, on poursuit le contrôle.

Dans le cas où le plan de joint est trouvé, on émet un diagnostic de défaut d'intégrité de la soudure.

A partir du diagramme de la figure 14, on obtient par un traitement de filtrage, le diagramme de la figure 15, sur lequel ne sont figurées que les transitions relatives aux bords du cordon de soudure, à l'exclusion de sa partie centrale.

On effectue successivement une recherche du bord gauche et une recherche du bord droit du cordon de soudure 45.

Pour cela, on calcule un seuil droit et un seuil gauche permettant de fournir un critère de recherche des bords du cordon de soudure.

Le seuil droit est défini par la relation suivante :

$$\text{seuil droit} = \text{minimum droit} + x \text{ \% de (maximum droit - minimum droit)},$$

x étant un paramètre appelé seuil de recherche de la soudure à droite.

De même, on obtient le seuil gauche par la relation :

$$\text{seuil gauche} = \text{minimum gauche} + y \text{ \% de (maximum gauche - minimum gauche)},$$

y étant un paramètre appelé seuil de recherche de la soudure à gauche.

Les valeurs de x et y sont déterminées en fonction des conditions d'éclairage du crayon.

Dans le cas où l'un de ces paramètres n'est pas satisfaisant pour réaliser une détermination précise des bords, on le réajuste par entrée d'une nouvelle valeur du paramètre dans le logiciel de traitement.

La recherche du bord gauche et du bord droit est réalisée, à partir des valeurs de seuil représentées par les segments de droite 52 et 53 sur la figure 15, par exemple en recherchant un certain nombre de points situés en-dessous du seuil dans un premier sens à partir du maximum suivi par un point situé au-dessus du seuil dans le second sens. Par exemple, on recherche cinq points sous le seuil dans un sens puis un point au-dessus du seuil dans le second sens. On obtient ainsi la position suivant les colonnes de l'image, du bord gauche et du bord droit représentés sur la figures 15 sous la forme des segments verticaux 55 et 56 et on détermine ainsi la position et la largeur du cordon de soudure 45 à partir du nombre de colonnes entre les bords gauche et droit et entre ces bords et le bord de la fenêtre pour déterminer leurs positions ; ces valeurs sont comparées à des valeurs de seuil constituant les paramètres, tolérance de position à gauche de la mire et tolérance de position à droite de la mire du système de traitement.

On compare également la largeur à une valeur de seuil constituant le paramètre largeur minimale de manque de soudure.

Dans le traitement successif des images du cordon de soudure, lorsque trois largeurs consécutives sont inférieures à la largeur minimale, on en déduit un manque de soudure et le contrôle est arrêté. Le cordon de soudure est déclaré défectueux. Dans le cas où l'on ne rencontre jamais trois largeurs consécutives inférieures à la largeur minimale, le contrôle est poursuivi et, en fin de contrôle, les positions et largeurs du cordon de soudure sont moyennées, puis comparées aux limites de position (tolérance de position à droite, tolérance de position à gauche) et de largeur (largeur minimale du cordon) pour émettre un verdict final transmis à l'automate.

Les résultats sont affichés sur l'écran du micro-ordinateur.

On effectue également une vérification de la rotation du crayon en examinant les mesures de largeur du cordon obtenues suivant toute sa longueur, en fin de contrôle.

Si les largeurs qui s'écartent de la valeur moyenne sont trop peu nombreuses, on émet un diagnostic relatif à la non rotation du crayon.

Sur la figure 16 et sur la figure 17, on a représenté l'image affichée sur l'écran en fin de contrôle. Dans le cas de la figure 16 (sensiblement analogue à la figure 12), le cordon de soudure est conforme. Dans le cas de la figure 17, le cordon de soudure est inexistant et jugé non conforme.

L'invention permet donc de réaliser sur le poste de soudage lui-même un contrôle du plan de joint, préalablement au soudage, et un contrôle du cordon de soudure relatif en particulier à la qualité et à la continuité de ce cordon de soudure.

Le système peut fonctionner en temps masqué par rapport à la réalisation de l'opération de soudage.

Le contrôle de la pénétration du cordon de soudure, dans le cas du soudage par faisceau laser est obtenu grâce à la corrélation qui existe entre la largeur du cordon de soudure et sa pénétration. Ce paramètre n'a pas de signification dans le cas du soudage TIG.

Le procédé de l'invention est mis en oeuvre sur le poste de soudage, pendant l'opération de soudage, si bien qu'on évite toute opération de manutention des crayons entre le poste de soudage et un poste de contrôle. Le verdict relatif à la conformité du cordon de soudure est disponible dès la fin de l'opération de soudage.

Les informations concernant l'opération dans son ensemble (soudage, positionnement et contrôle) peuvent être sauvegardées sur disque dur et sont exploitables par la suite sous forme de bases de données.

Enfin, l'éclairage utilisé pour les prises de vues est un éclairage standard qui peut être obtenu par des moyens disponibles sur le marché.

L'invention ne se limite pas strictement aux modes de réalisation qui ont été décrits.

C'est ainsi que le procédé de contrôle du plan de joint peut être appliqué à tout type de soudage de bouchons sur des crayons de combustible nucléaire.

On peut réaliser le traitement des images numérisées du cordon de soudure par des méthodes différentes de celles qui ont été envisagées dans le cas du soudage par faisceau laser.

Enfin, le procédé suivant l'invention s'applique dans le cas de tout crayon de combustible nucléaire comportant des bouchons de fermeture étanche engagés dans des parties d'extrémité de la gaine du crayon.

**Revendications**

1. Procédé de contrôle du soudage d'un bouchon (4) de fermeture étanche d'un crayon de combustible (1) pour un réacteur nucléaire comportant une gaine tubulaire (2) renfermant une pluralité de pastilles de combustible nucléaire (3) empilées dans la direction axiale de la gaine (2) et deux bouchons (4) de fermeture étanche engagés coaxialement, par une partie cylindrique (4a), chacun dans une partie d'extrémité axiale de la gaine (2), le soudage d'un bouchon (4) étant réalisé dans un poste de soudage (8; 28), par fusion de la gaine (2) et du bouchon (4) suivant une ligne circulaire, dans un plan de joint (22; 42) perpendiculaire à l'axe (5) de la gaine (2) et du bouchon (4), par un moyen de soudage (12; 27) dirigé radialement par rapport à la ligne circulaire dans le plan de joint (22; 42) de la gaine (2) et du bouchon (4) qui sont en prise avec un moyen de mise en rotation permettant de les mettre en rotation autour de leur axe commun (5), le contrôle étant réalisé par exploitation d'images optiques numérisées de zones du crayon (1) voisines de la ligne circulaire de jonction et réparties suivant la périphérie du crayon (1), **caractérisé par le fait :**

- **que**, préalablement au soudage, le bouchon (4) et la gaine (2) étant en position de soudage au poste de soudage, on fait tourner la gaine (2) et le bouchon (4) autour de leur axe commun (5) à l'aide du moyen de mise en rotation, on réalise des prises de vues suivant la périphérie du crayon (1) pour obtenir des images sous forme numérisée, on détermine, par analyse des images sous forme numérisée, le positionnement du plan de joint (22; 42) et on vérifie la réalisation de la rotation du crayon (1),
- on en déduit s'il est possible de réaliser le soudage,
- dans le cas où l'on réalise le soudage, après soudage du bouchon (4) sur la gaine (2) du crayon (1), on réalise des prises de vues sur le crayon (1) en position au poste de soudage (8;28), suivant la périphérie du crayon (1), au voisinage de la ligne de jonction, de manière à obtenir des images numérisées et on réalise, par analyse des images numérisées, le contrôle de la conformité d'un cordon de soudure (7; 45) réalisé suivant la ligne de jonction.

2. Procédé de contrôle suivant la revendication 1, **caractérisé par le fait qu'**on détermine, sur les images sous forme numérisée obtenues préalablement au soudage, une ligne de référence (20, 40) disposée suivant une direction verticale de l'image correspondant à une direction circonférentielle du crayon (1 ), dans un plan perpendiculaire à l'axe (5) du crayon et qu'on détermine les niveaux de gris de points de l'image sur des lignes de recherche (19', 39) perpendiculaires à la ligne de référence (20; 40), de manière à déterminer la position de deux bords (25, 26) du plan de joint (22; 42), dans deux plans perpendiculaires à l'axe (5) du crayon de combustible.

3. Procédé suivant la revendication 2, **caractérisé par le fait qu'**on détermine une ligne de recherche moyenne à partir de N lignes de recherche voisines, qu'on détermine, sur un diagramme donnant les niveaux de gris sur la ligne de recherche moyenne, un seuil de détection (24) du plan de joint et qu'on compare les niveaux de gris suivant la ligne de recherche moyenne au seuil de détection pour déterminer la position des bords (25, 26) du plan de joint (22; 42).

4. Procédé suivant l'une quelconque des revendications 1 à 3, dans le cas d'un soudage par laser pulsé, **caractérisé par le fait qu'**on établit des diagrammes de niveaux de gris suivant chacune des colonnes de l'image correspondant à des directions périphériques du crayon (1), dans des plans perpendiculaires à l'axe (5) du crayon, qu'on détermine, sur la courbe obtenue pour chacune des colonnes de l'image, les transitions entre minima et maxima de la courbe (46, 47) qui ont une périodicité compatible avec la période des pulses du faisceau de laser pulsé,
    qu'on détermine, pour chaque colonne de l'image, le nombre de transitions ayant une période compatible avec la période des pulses du faisceau laser pour obtenir une courbe de répartition des transitions suivant les colonnes de l'image, qu'on réalise un filtrage de cette courbe donnant le nombre de transitions par colonne pour obtenir une courbe de répartition des transitions au voisinage de chacun des bords (55, 56) du cordon de soudure (45), qu'on détermine une valeur de seuil suivant chacune des zones de bord du cordon de soudure (45) et qu'on détermine la position des bords (55, 56) du cordon de soudure par détermination des colonnes suivant lesquelles les nombres de transitions passent sous le seuil déterminé.

5. Procédé suivant l'une quelconque des revendications 2 et 3, **caractérisé par le fait qu'**on détermine la position des bords (55, 56) du cordon de soudure (45) par rapport à la ligne de référence (40).

6. Procédé suivant la revendication 4, **caractérisé par le fait qu'**on détermine la largeur du cordon de soudure (45) entre ses bords (55, 56) dans la direction de l'axe (5) du crayon (1) et qu'on en déduit, par corrélation, la profondeur de pénétration de la soudure.

7. Procédé suivant l'une quelconque des revendication 2 et 3, dans le cas d'un soudage TIG effectué par une électrode (12) dans une disposition perpendiculaire à l'axe (5) du crayon de combustible, **caractérisé par le fait que** la ligne de référence est constituée par l'axe de l'électrode (12) et qu'on effectue la recherche de l'électrode (12) et la détermination de la position de son axe à partir des niveaux de gris de points situés sur une ligne de recherche (19) perpendiculaire à la ligne de référence (20).

8. Procédé suivant l'une quelconque des revendications 3 et 4, **caractérisé par le fait qu'**on détermine la distance dans la direction de l'axe du crayon (5) entre la ligne de référence (20; 40) et l'un au moins des bords du plan de joint (22; 42).

**9.** Procédé de contrôle suivant l'une quelconque des revendications 1, 2 et 3, dans le cas d'un soudage par faisceau laser, **caractérisé par le fait qu'**on détermine une ligne de référence (40) fixe disposée suivant l'axe du soudage par faisceau laser et qu'on détermine la position du plan de joint par rapport à cette ligne de référence fixe.

**10.** Procédé suivant la revendication 7, **caractérisé par le fait qu'**on mesure, par comptage de points de l'image suivant l'axe de l'électrode (12) trouvé précédemment, la distance entre la pointe de l'électrode (12) et le crayon (1), la sortie de l'électrode (12) au niveau de sa pointe se traduisant par une transition noir blanc et la rentrée dans l'image du crayon (1), par une transition blanc noir.

**11.** Procédé suivant l'une quelconque des revendications 7 et 10, **caractérisé par le fait qu'**après soudage, on réalise une recherche de plan de joint sur la surface du crayon (1), dans la zone du cordon de soudure.

**Claims**

**1.** Method of inspection of the welding of a sealed closure plug (4) of a fuel rod (1) for a nuclear reactor comprising a tubular sleeve (2) enclosing a plurality of nuclear fuel pellets (3) stacked in the axial direction of the sleeve (2) and, two sealed closure plugs (4) engaged coaxially by a cylindrical section (4a), each in one section of the axial end of the sleeve (2), the welding of a plug (4) being performed in a welding unit (8; 28) by fusion of the sleeve (2) and the plug (4) along a circular line in a joining plane (22; 42) perpendicular to the axis (5) of the sleeve (2) and of the plug (4) by a welding means (12; 27) directed radially in relation to the circular line in the joining plane (22; 42) of the sleeve (2) and the plug (4), which are engaged with a means for setting in rotation, allowing these to be set in rotation around their common axis (5), the inspection being conducted by utilising digitised optical images of zones of the rod (1), which are adjacent to the circular joining line and distributed around the periphery of the rod (1), **characterised in that**

- prior to the welding, with the plug (4) and the sleeve (2) in the welding position in the welding unit, the sleeve (2) and the plug (4) are caused to rotate around their common axis (5) by means of the means for setting in rotation, photographs are taken along the periphery of the rod (1) to obtain images in digitised form, the positioning of the joining plane (22; 42) is determined by analysing the images in digitised form and the execution of the rotation of the rod (1) is verified;
- it is deduced from this whether it is possible to conduct the welding;
- in the case where welding is conducted, after the plug (4) is welded onto the sleeve (2) of the rod (1), photographs are taken on the rod (1) in position in the welding unit (8; 28) along the periphery of the rod (1) in the vicinity of the joining line in order to obtain digitised images, and the conformity of a weld (7; 45) performed along the joining line is inspected by analysis of the digitised images.

**2.** Method of inspection according to Claim 1, **characterised in that** on the images in digitised form obtained prior to welding, a reference line (20; 40) is determined, which is disposed in a vertical direction of the corresponding image to a circumferential direction of the rod (1) in a plane perpendicular to the axis (5) of the rod, and that the grey levels of image points are determined on examination lines (19', 39) perpendicular to the reference line (20; 40) so as to determine the position of two edges (25, 26) of the joining plane (22; 42) in two planes perpendicular to the axis (5) of the fuel rod.

**3.** Method according to Claim 2, **characterised in that** a mean examination line is determined starting from N examination lines, that on a diagram giving the grey levels on the mean examination line a detection threshold (24) of the joining plane is determined, and that the grey levels along the mean examination line are compared to the detection threshold to determine the position of the edges (25, 26) of the joining plane (22; 42).

**4.** Method according to any one of Claims 1 to 3 in the case of pulsed laser welding, **characterised in that** grey level diagrams are drawn up along each of the columns of the image corresponding to the peripheral directions of the rod (1) in planes perpendicular to the axis (5) of the rod, that on the curve obtained for each of the columns of the image, the transitions between minima and maxima of the curve (46, 47), which have a periodicity that is compatible with the cycle of the pulses of the pulsed laser beam, are determined; that for each image column, the number of transitions having a cycle compatible with the cycle of the pulses of the laser beam is determined to obtain a distribution curve of the transitions along the image columns, that filtering of this curve is performed giving the number of transitions per column to obtain a distribution curve of the transitions in the vicinity of each of the edges (55, 56) of the weld (45), that a threshold value is determined for each of the edge zones of the weld (45), and that the position of the edges (55, 56) of the weld are determined by determining the columns, along which the numbers of transitions pass below the determined threshold.

5. Method according to any one of Claims 2 and 3, **characterised in that** the position of the edges (55, 56) of the weld (45) is determined in relation to the reference line (40).

6. Method according to Claim 4, **characterised in that** the width of the weld (45) is determined between its edges (55, 56) in the direction of the axis (5) of the rod (1), and that the depth of penetration of the weld is deduced from this by correlation.

7. Method according to any one of Claims 2 and 3 in the case of TIG welding conducted by an electrode (12) in an arrangement perpendicular to the axis (5) of the fuel rod, **characterised in that** the reference line is formed by the axis of the electrode (12), and that examination of the electrode (12) and determination of the position of its axis are performed on the basis of grey levels of points located on an examination line (19) perpendicular to the reference line (20).

8. Method according to any one of Claims 3 and 4, **characterised in that** the distance in the direction of the axis (5) of the rod between the reference line (20; 40) and at least one of the edges of the joining plane (22; 42) is determined.

9. Method of inspection according to any one of Claims 1, 2 and 3 in the case of laser beam welding, **characterised in that** a fixed reference line (40) disposed along the axis of the laser beam welding is determined, and that the position of the joining plane in relation to this fixed reference line is determined.

10. Method according to Claim 7, **characterised in that** the distance between the tip of the electrode (12) and the rod (1) is determined by counting the image points along the axis of the electrode (12) found previously, the outlet of the electrode (12) at the level of its tip being depicted by a black-white transition and the return to the image of the rod (1) by a white-black transition.

11. Method according to any one of Claims 7 and 10, **characterised in that** after welding an examination of the joining plane on the surface of the rod (1) is conducted in the zone of the weld.

**Patentansprüche**

1. Verfahren zur Prüfung der Schweißverbindung eines Verschlussstücks (4) eines Kemreaktorbrennstabs (1), der eine röhrenförmigen Hülse (2), die eine Vielzahl in der axialen Richtung der Hülse (2) gestapelter Brennstofftabletten (3) enthält, sowie zwei dichte Verschlussstücke (4) umfasst, die koaxial mit einem zylindrischen Teil (4a) in jeweils einem der axialen Endteile der Hülse (2) sitzen, wobei die Verschweißung eines Verschlussstücks (4) in einer Schweißstation (8; 28) erfolgt, durch das Verschmelzen der Hülse (2) und des Verschlussstücks (4) entsprechend einer kreisförmigen Linie in einer Trennfuge (22; 42) der Hülse (2) und des Verschlussstücks (4), die eingespannt sind in eine Drehantriebseinrichtung, die sie in Rotation um ihre gemeinsame Achse (5) versetzt, wobei die Prüfung durch die Auswertung digitalisierter optischer Bilder von Zonen des Brennstabs (1) erfolgt, die der kreisförmigen Verbindungslinie benachbart und über den Umfang des Brennstabs (1) verteilt sind, **dadurch gekennzeichnet,**

- **dass** man vor der Schweißung - wobei das Verschlussstück (4) und die Hülse (2) sich in der Schweißstation in Schweißposition befinden -, die Hülse (2) und das Verschlussstück (4) mit Hilfe der Drehantriebseinrichtung um ihre gemeinsame Achse (5) rotieren lässt, man Aufnahmen an der Peripherie des Brennstabs (1) macht, um Bilder in digitalisierter Form zu erhalten, man durch Analyse der digitalisierten Bilder die Position der Trennfuge (22; 42) bestimmt, und man die Realisierung der Rotation des Brennstabs (1) verifiziert,
- **dass** man daraus ableitet, ob es möglich ist, die Schweißverbindung zu realisieren,
- **dass** man, falls die Schweißverbindung realisiert wird, nach dem Verschweißen des Verschlussstücks (4) mit der Hülse (2) des Brennstabs (1) Aufnahmen des in der Schweißstation (8; 28) in Position befindlichen Brennstabs (1) macht, gemäß dem Umfang des Brennstabs (1), in der Umgebung der Verbindungslinie, um digitalisierte Bilder zu erhalten, und man durch Analyse der digitalisierten Bilder die Konformitätskontrolle einer längs der Verbindungslinie hergestellten Schweißnaht (7; 45) durchführt.

**2.** Prüfverfahren nach Anspruch 1, **dadurch gekennzeichnet, dass** man in den vor der Schweißung erhaltenen digitalisierten Bildern eine Bezugslinie (20, 40) bestimmt, angeordnet gemäß einer vertikalen Bildrichtung entsprechend einer Umfangsrichtung des Brennstabs (1), in einer zu der Achse (5) des Brennstabs senkrechten Ebene, und dass man die Graupegel der Bildpunkte des Bilds in den zu der Bezugslinie (20; 40) senkrechten Untersuchungslinien (19', 39) bestimmt, um die Position der beiden Ränder (25, 26) der Trennfuge (22; 42) in zwei zu der Achse (5) des Brennstabs senkrechten Ebenen zu bestimmen.

**3.** Verfahren nach Anspruch 2, **dadurch gekennzeichnet, dass** man aus N benachbarten Untersuchungslinien eine mittlere Untersuchungslinie bestimmt, man in einem Diagramm, das die Graupegel in der mittleren Untersuchungslinie angibt, eine Detektionsschwelle (24) der Trennfuge bestimmt, und man die Graupegel gemäß der mittleren Untersuchungslinie mit der Detektionsschwelle vergleicht, um die Position der Ränder (25, 26) der Trennfuge (22; 42) zu bestimmen.

**4.** Verfahren nach einem der Ansprüche 1 bis 3 im Falle einer Schweißung mittels Impulslaser, **dadurch gekennzeichnet, dass** man jeder der Spalten des Bildes entsprechende Graupegeldiagramme erstellt, die Umfangsrichtungen des Brennstabs (1) in der zu der Achse (5) des Brennstabs senkrechten Ebenen entsprechen, und dass man in der für jede der Bildspalten erhaltenen Kurve die Übergänge zwischen Minima und Maxima der Kurve (46, 47) bestimmt, die eine Periodizität haben, die kompatibel ist mit der Impulsperiode des Impulslaserstrahls,

dass man für jede Spalte des Bilds die Anzahl der Übergänge bestimmt, die eine Periode haben, die kompatibel ist mit der Periode der Impulse des Laserstrahls, um eine Verteilungskurve der Übergänge entsprechend den Spalten des Bildes zu erhalten,

dass man diese die Anzahl Übergänge pro Spalte liefernde Kurve filtert, um eine Verteilungskurve der Übergänge in der Umgebung jedes der Ränder (55, 56) der Schweißnaht (45) zu erhalten,

dass man einen jeder der Randzonen der Schweißnaht (45) entsprechenden Schwellenwert bestimmt,

und dass man die Position der Ränder (55, 56) der Schweißnaht durch Bestimmung der Spalten bestimmt, gemäß denen die Anzahlen Übergänge den festgelegten Schwellenwert unterschreiten.

**5.** Verfahren nach einem der Ansprüche 2 und 3, **dadurch gekennzeichnet, dass** man die Position der Ränder (55, 56) der Schweißnaht (45) in Bezug auf die Bezugslinie (40) bestimmt.

**6.** Verfahren nach Anspruch 4, **dadurch gekennzeichnet, dass** man die Breite der Schweißnaht (45) zwischen ihren Rändern (55, 56) in der Richtung der Achse (5) des Brennstabs (1) bestimmt und man daraus mittels Korrelation die Eindringtiefe der Schweißverbindung ableitet.

**7.** Verfahren nach einem der Ansprüche 2 und 3 im Falle einer TIG-Schweißung mittels einer Elektrode (12) in einer zur Achse (5) des Brennstabs (1) senkrechten Position, **dadurch gekennzeichnet, dass** die Bezugslinie durch die Achse der Elektrode (12) gebildet wird und dass man die Suche nach der Elektrode (12) und die Bestimmung der Position ihrer Achse aufgrund der Graupegel von Punkten durchführt, die sich auf einer zu der Bezugslinie (20) senkrechten Suchlinie (19) befinden.

**8.** Verfahren nach einem der Ansprüche 3 und 4, **dadurch gekennzeichnet, dass** man den Abstand zwischen der Bezugslinie (20; 40) und wenigstens einem der Ränder der Trennfuge (22; 24) in der Richtung der Achse des Brennstabs (5) bestimmt.

**9.** Verfahren nach einem der Ansprüche 1, 2 und 3 im Falle einer Laserstrahlschweißung, **dadurch gekennzeichnet, dass** man eine feste Bezugslinie (40) bestimmt, angeordnet gemäß der Achse der Laserstrahlschweißung, und man die Position der Trennfuge in Bezug auf diese feste Bezugslinie bestimmt.

**10.** Verfahren nach Anspruch 7, dadurch gekennzeichent, dass man durch Zählen der Bildpunkte längs der Achse der vorher gefundenen Elektrode (12) den Abstand zwischen der Spitze der Elektrode (12) und dem Brennstab (1) misst, wobei das Austreten aus der Elektrode (12) in Höhe ihrer Spitze sich durch einen Schwarz-Weiß-Übergang ausdrückt und der Eintreten in die Abbildung des Brennstabs (1) durch einen Weiß-Schwarz-Übergang.

**11.** Verfahren nach einem der Ansprüche 7 und 10, **dadurch gekennzeichnet, dass** man nach der Schweißung in der Zone der Schweißnaht eine Untersuchung der Trennfuge an der Oberfläche des Brennstabs (1) durchführt.

## FIG.1

## FIG.2

FIG.3

FIG.4

Position: 0,000 mm

Largeur: 0,049 mm

Crayon-électrode : 0,653 mm

CONFORME

FIG.5

Position: -0,196 mm

Largeur: 0,049 mm

Crayon-électrode: 0.702mm

NON CONFORME

FIG.6

CONFORME

_FIG.7_

NON CONFORME

_FIG.8_

NIVEAUX DE GRIS

ACQUISITIONS SUR LA LIGNE

FIG.9

EP 1 214 716 B1

Position:-0,0413 mm

Largeur:0,0827mm

CONFORME

FIG.10

Position: 0,1516 mm

Largeur: 0,0482 mm

NON CONFORME

FIG.11

Position : 0,0138 mm

Largeur : 1,6124 mm

CONFORME

FIG.12

FIG.13

FIG.14

EP 1 214 716 B1

COLONNES

<u>FIG.15</u>

EP 1 214 716 B1

Position: 0,0138 mm
Largeur: 1, 6124 mm
CONFORME

FIG.16

Position:
Largeur: 0,0000 mm
NON CONFORME

FIG.17